(19) Europäisches Patentamt
European Patent Office
Office européen des brevets

(11) **EP 2 515 214 A2**

(12) **EUROPEAN PATENT APPLICATION**

(43) Date of publication:
**24.10.2012 Bulletin 2012/43**

(51) Int Cl.:
*G06F 3/041* $^{(2006.01)}$     *G06F 3/042* $^{(2006.01)}$

(21) Application number: **12002667.9**

(22) Date of filing: **17.04.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **20.04.2011 US 201161477601 P**

(71) Applicant: **Integrated Digital Technologies, Inc. Hsinchu Science Park, Taipei (TW)**

(72) Inventors:
• **Hwang, Naejye**
**Hsinchu City**
**Taiwan (TW)**

• **Liaw, Shen-Tai**
**Hsinchu City**
**Taiwan (TW)**
• **Han, Chen-Hsein**
**Hsinchu City**
**Taiwan (TW)**
• **Yuan, Chih-Ming**
**Hsinchu City**
**Taiwan (TW)**

(74) Representative: **Hoefer & Partner**
**Pilgersheimer Straße 20**
**81543 München (DE)**

(54)   **Sensing apparatus and sending method for sensing touch position on display panel**

(57)    A sensing apparatus (600, 606, 616) includes a sensing cell (602, 602_1, 602_n, 612_1, 612_n) and a processing circuit (604, 608, 61 8). The sensing cell (602, 602_1 , 602_n, 612_1 , 612_n) is disposed inside a display panel, and includes a first type sensing device (610) and a second type sensing device (620). The first type sensing device (610) is arranged to generate a first type sensing signal when the sensing cell (602, 602_1, 602_n, 612_1 , 612_n) receives an input event. The second type sensing device (620) is adjacent to the first type sensing device (610), and arranged to generate a second type sensing signal when the sensing cell (602, 602_1, 602_n, 612_1, 612_n) receives the input event, wherein a sensing ability of the first type sensing device (610) to detect the input event is different from a sensing ability of the second type sensing device (620) to detect the input event. The processing circuit (604, 608, 618) is arranged to output a sensing output signal corresponding to the sensing cell (602, 602_1, 602_n, 612_1, 612_n) according to a difference between the first type sensing signal and the second type sensing signal.

FIG. 8

EP 2 515 214 A2

**Description**

The present invention relates to a sensing apparatus and related sensing method for sensing a touch position on a display panel according to pre-characterizing clauses of claims 1 and 12.

By disposing photo-sensing devices directly on the liquid crystal display (LCD) panel, the in-cell touch technique is capable of reducing the production cost and improving the production yield, and applications thereof are also broadened. However, the photocurrent signal intensity may be affected by the process variation and the coupling noise interferences among the circuit elements, each of which may results from the chance cause (i.e., the random factor) and assignable chance (i.e., local factor). Hence, the accuracy of detecting the input event is degraded. Moreover, the signal-to-noise (SNR) of the sensing unit has to be high enough to detect the input event correctly.

This in mind, the present invention aims at providing a sensing apparatus and a sensing method for sensing a touch position on a display panel to detect an input event (e.g. an illumination event) according to a difference between sensing signals for reducing the process variation and the signal coupling interference.

This is achieved by a sensing apparatus and a sensing method according to claims 1 and 12, respectively. The dependent claims pertain to corresponding further developments and improvements.

As will be seen more clearly from the detailed description following below, the claimed sensing apparatus includes at least one sensing cell and a processing circuit. The sensing cell is disposed inside a display panel, and includes a first type sensing device and a second type sensing device. The first type sensing device is arranged to generate a first type sensing signal when the sensing cell receives an input event. The second type sensing device is adjacent to the first type sensing device, and arranged to generate a second type sensing signal when the sensing cell receives the input event, wherein a sensing ability of the first type sensing device to detect the input event is different from a sensing ability of the second type sensing device to detect the input event. The processing circuit is coupled to the sensing cell, and arranged for outputting a sensing output signal corresponding to the sensing cell according to a difference between the first type sensing signal and the second type sensing signal.

The claimed sensing method includes following steps: when the display panel detects occurrence of an input event, generating a first type sensing signal corresponding to the input event based on a first sensing ability, and generating a second type sensing signal based on a second sensing ability different from the first sensing ability; and outputting a sensing output signal corresponding to the input event according to a difference between the first type sensing signal and the second type sensing signal.

In the following, the invention is further illustrated byway of example, taking reference to the accompanying drawings. Thereof

FIG. 1 is a diagram illustrating the partial design of the conventional in-cell photo-sensing system,
FIG. 2 is a diagram illustrating the relation between the photocurrent signal intensity and the position on the display panel of the in-cell photo-sensing system according to the prior art,
FIG. 3 is a diagram illustrating the relation between the photocurrent signal intensity and the time in one sensing unit of the in-cell photo-sensing system according to the prior art,
FIG. 4 is a diagram illustrating a generalized sensing cell according to an embodiment of the present invention,
FIG. 5 is a diagram illustrating an exemplary sensing cell according to a first embodiment of the present invention,
FIG. 6 is a diagram illustrating an exemplary sensing cell according to a second embodiment of the present invention,
FIG. 7 is a diagram illustrating a generalized sensing apparatus for sensing a touch position on a display panel according to an embodiment of the present invention,
FIG. 8 is a diagram illustrating an exemplary sensing apparatus for sensing a touch position on a display panel according to an embodiment of the present invention,
FIG. 9 is a diagram illustrating another exemplary sensing apparatus for sensing a touch position on a display panel according to another embodiment of the present invention,
FIG. 10 is a diagram illustrating the relation between the photocurrent signal intensity and the position on a display panel of the sensing apparatus shown in FIG. 8, and
FIG. 11 is a diagram illustrating the relation between the photocurrent signal intensity and the time in the sensing cell shown in FIG. 8.

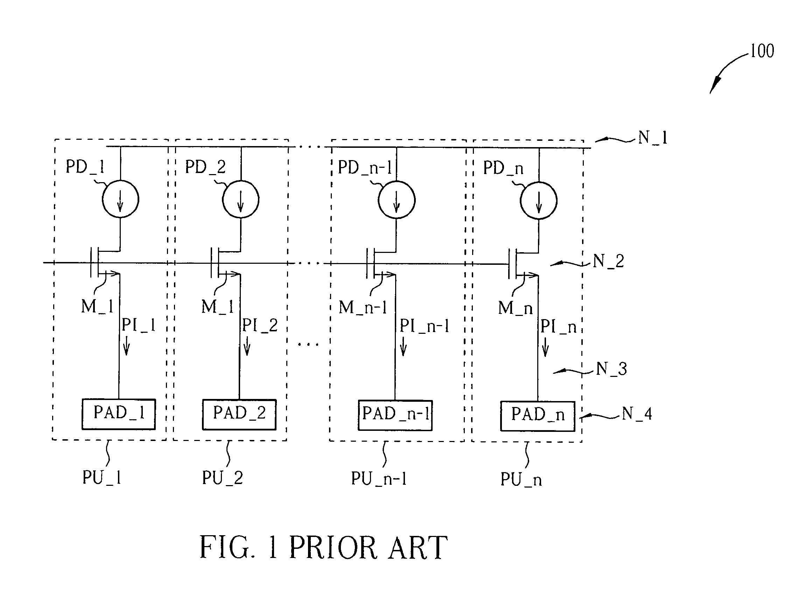

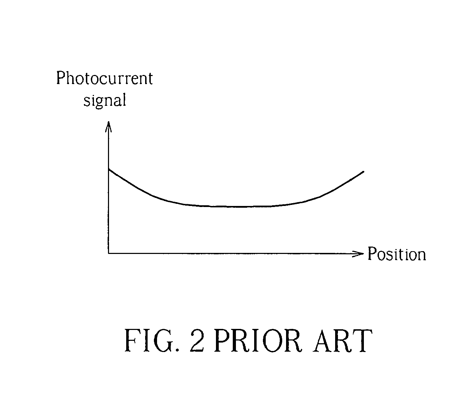

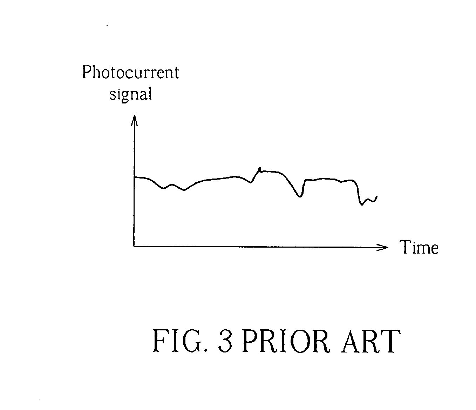

As shown in FIG. 1, when the photo-sensing units PU_1-PU_n, including photo-sensing devices PD_1-PD_n, receive an input event (e.g., an illumination event) having uniform and stable light intensity, transistors M_1-M_n are conducted according to a gate control signal for transmitting photocurrent signals PI_1-PI_n to pads PAD_1-PAD_n, respectively. A backend processing circuit (not shown in FIG. 1) then processes the received photocurrent signals PI_1-PI_n, respectively, and accordingly determines light intensity received by each photo-sensing unit. As shown in FIG. 2, due to the process variation, the photocurrent signal intensity is non-uniformly distributed on the display panel, which affects the accuracy of detecting the input event. Please refer to FIG. 1 again. The interferences each photocurrent signal may be affected by include noises N_1-N_4, which is generated from the common voltage node, the gate signal clock feedthrough, the source signal clock feedthrough, and the readout circuit common node (i.e., each pad), respectively. As shown in FIG. 3, the photocurrent signal intensity of the sensing unit may be affected by at least one of the noises N_1-N_4, and thus is varied obviously with time. As a result, the signal-to-noise (SNR) of the sensing unit has to be high enough to detect the input event correctly.

In brief, the concept of the present invention is to dispose at least two adjacent sensing devices disposed inside a display panel on a same sensing unit, wherein there is a sufficient difference in sensing abilities between the at least two adjacent sensing devices for detecting the same input event. The sensing unit may be applied to the in-cell photo-sensing touch, and the touch position information of the display panel is obtained by sensing brightness variations of touch positions. In addition, sensing signals generated due to the same input event in the at least two adjacent sensing devices respectively may be outputted in a differential manner, and the effects caused by the processing variation and the noise coupling can be greatly reduced in detecting the input event. Further description is detailed as follows.

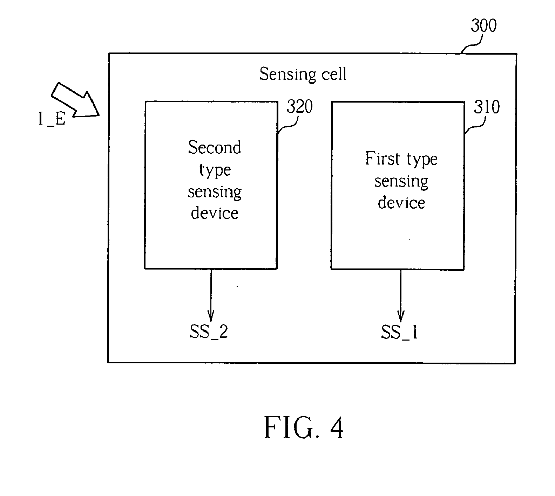

Please refer to FIG. 4, which is a diagram illustrating a generalized sensing cell according to an embodiment of the present invention. The sensing cell 300 includes, but is not limited to, a first type sensing device 310 and a second type sensing device 320. The first type sensing device 310 is disposed inside a display panel (not shown in FIG. 4), and arranged to generate a first type sensing signal SS_1 according to an input event I_E when the sensing cell 300 receives the input event I_E. The second type sensing device 320 is also disposed inside the display panel, and arranged to generate a second type sensing signal SS_2 not according to the input event I_E when the sensing cell 300 receives the input event I_E. In addition, as the second type sensing device 320 is adjacent to the first type sensing device 310, the first type sensing device 310 and the second type sensing device 320 are affected by substantially the same local factor of the aforementioned process variation and/or noise coupling. It should be noted that the second type sensing device 320 generates the second type sensing signal SS_2 not according to the received input event I_E. In one implementation, with proper design, the second type sensing device 320 may not receive an input signal of the input event I_E, or ignore the input signal even after receiving the input signal of the input event L_E. By way of example, but not limitation, the second type sensing device 320 may obstruct the path used to receive the input signal, or eliminate the input signal by the inner material and/or the architecture design thereof. Moreover, the first type sensing device 310 and the second type sensing device 320 may have different architectures to achieve the sufficient difference in sensing responses on the same input event I_E therebetween.

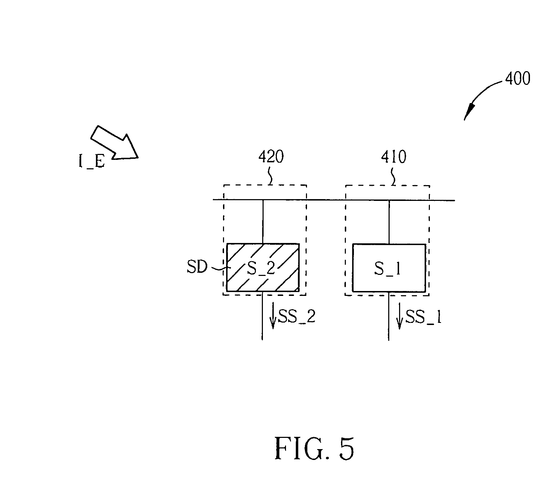

Please refer to FIG. 5, which is a diagram illustrating an exemplary sensing cell according to a first embodiment of the present invention. The exemplary sensing cell 400 includes, but is not limited to, a first type sensing device 410 and a second type sensing device 420, wherein the first type sensing device 410 and the second type sensing device 420 are both disposed inside a display panel (not shown in FIG. 5). The first type sensing device 410 includes a first sensor S_1, wherein the first sensor S_1 is arranged to generate a first type sensing signal SS_1 according to an input event I_E when the sensing cell 400 receives the input event I_E. The second type sensing device 420 is adjacent to the first type sensing device 410, and includes a second sensor S_2 and an obstruction unit SD. The obstruction unit SD is arranged for obstructing an input signal of the input event I_E from being transmitted to the second sensor S_2 (e.g., obstructing the path used by the second sensor S_2 to receive the input signal) when the sensing cell 400 receives the input event I_E. Therefore, even if the input event I_E occurs on the sensing cell 400, the second sensor S_2 generates a second type sensing signal SS_2 without receiving the input signal of the input event I_E. Please note that, in this embodiment, the input event I_E may represent a brightness variation of a touch position on the display panel (hereafter referred to as the illumination event). For example, the illumination event may be a light-emitting event that the display panel is touched by a light pen, or a light-shielding event that the display panel is touched by a finger. Besides, in a case where the input event I_E represents the brightness variation of the touch position, the first type sensing signal SS_1 may be a photocurrent signal, and the second type sensing signal SS_2 may be a dark-current signal. That is, each of the first sensor S_1 and the second sensor S_2 may be a photo sensor (e.g., an in-cell photo-sensor). Regarding the second type sensing signal SS_2 (e.g., a dark-current signal), the first type sensing signal SS_1 (e.g., a photocurrent signal) therefore further carries information of the illumination event. In addition, as the first type sensing device 410 and second type sensing device 420 are adjacent each other, the first type sensing signal SS_1 (e.g., a photocurrent signal) and the second type sensing signal SS_2 (e.g., a dark-current signal) may be regarded as being affected by the same process variation and circuit noise interference. In this embodiment, the effects caused by the process variation and the circuit noise interference may be eliminated by performing subtraction of the first type sensing signal SS_1 and the second type sensing signal SS_2, and the first type sensing signal SS_1 and the second type sensing signal SS_2 may be outputted simultaneously by the sensing cell 400 to obtain better sensing quality.

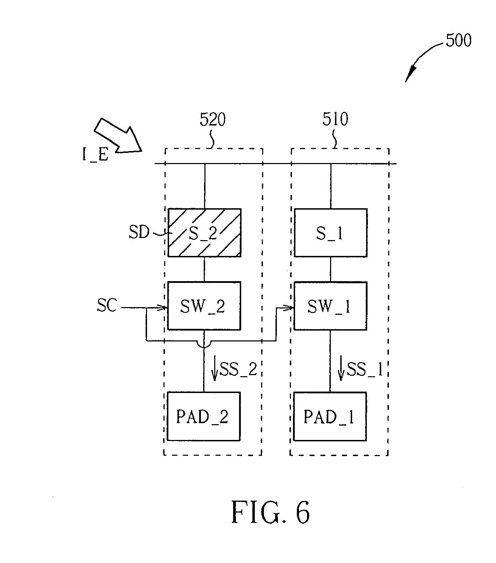

Please refer to FIG. 6, which is a diagram illustrating an exemplary sensing cell according to a second embodiment of the present invention. The exemplary sensing cell 500 includes, but is not limited to, a first type sensing device 510 and a second type sensing device 520. The first type sensing device 510 includes the first sensor S_1 shown in FIG. 5, a first pad PAD_1 , and a first switch SW_1. As mentioned above, when the sensing cell 500 receives an input event I_E, the first sensor S_1 is arranged to generate a first type sensing signal SS_1 according to the input event I_E. In addition, the first switch SW_1 is arranged for controlling the first sensor S_1 to transmit the first type sensing signal SS_1 to the first pad PAD_1 according to a control signal SC. The second type sensing device 520 includes the second sensor S_2 and the obstruction unit SD shown in FIG. 5, and further includes a second pad PAD_2, and a second switch SW_2. The obstruction unit SD is arranged to obstruct an input signal of the input event I_E from being transmitted to the second sensor S_2 (e.g., obstructing the path used by the second sensor S_2 to receive the input signal) when the sensing cell 500 receives the input event I_E. Therefore, the second sensor S_2 generates a second type sensing signal SS_2 without receiving the input signal of the input event I_E. In addition, the second switch SW_2 is arranged to control the second sensor S_2 to transmit the second type sensing signal SS_2 to the second pad PAD_2 according to the control signal SC. In other words, the sensing cell 500 may output the first type sensing signal SS_1 and the second type sensing signal SS_2 simultaneously.

The major difference between the sensing cell 500 shown in FIG. 6 and the sensing cell 400 shown in FIG. 5 is that each sensing device included in the sensing cell 500 further includes a switch and a pad, wherein the switch is arranged to control the transmission of the sensing signal of the sensing device, and the pad is arranged to receive the sensing signal of the sensing device. Please note that both of the first switch SW_1 and the second switch SW_2 may be implemented by transistors, and the first sensor S_1 and the second sensor S_2 may be implemented by photo-sensing devices. The sensing cell 500 may thus be applied to in-cell photo-sensing system 100 shown in FIG. 1 .

It should be noted that the above is for illustrative purposes only, and is not meant to be a limitation of the present invention. For example, by attenuating the input signal of the input event I_E, the second type sensing device shown in FIG. 5 /FIG. 6 may also achieve the objective of generating the second sensing signal SS_2 not according to the input event I_E. To put it another way, the obstruction unit SD may be substituted by an attenuation unit. The sensors shown in FIG. 6 may not be coupled to the switches and/or the pads shown in FIG. 6. In an alternative design, the first type sensing device 510 may omit the pad PAD_1 (i.e., outputting the first type sensing signal SS_1 directly), and the second type sensing device 520 may omit the pad PAD_2 (i.e., outputting the second type sensing signal SS_2 directly). In another alternative design, the second type sensing device 520 may omit the obstruction unit SD, and the second sensor S_2 may have a design (e.g., the inner material and/or the architecture design) different from that of the first sensor S_1, which realizes the sensing ability thereof to detect the input event I_E is different from the sensing ability of the first type sensing device 510 to detect the input event I_E. In yet another alternative design, the first type sensing device 510 may omit the pad PAD_1 (i.e., outputting the first type sensing signal SS_1 directly), the second type sensing device 520 may omit the obstruction unit SD and the pad PAD_2 (i.e., outputting the second type sensing signal SS_2 directly), and the second sensor S_2 may have a design (e.g., the inner material and/or the architecture design) different from that of the first sensor S_1. In brief, as long as a sensing device included in a sensing cell generates a sensing signal according to an input event while another sensing device included in the sensing cell generates another sensing signal not according to the input event when the sensing cell receives the input event, the spirit of the present invention is obeyed. Furthermore, in addition to the photo-sensing system, the sensing cell architecture shown in FIG. 4 may be applied to other types of sensing systems (e.g., a thermal sensing system).

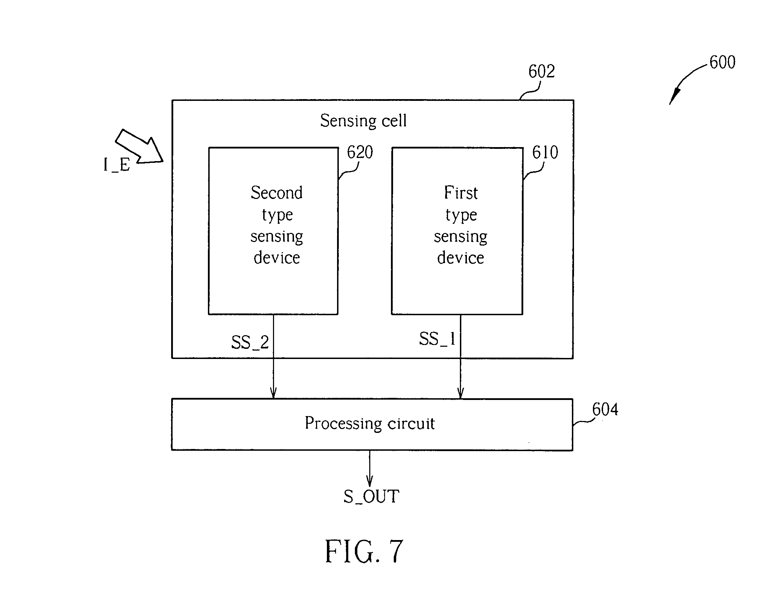

Please refer to FIG. 7, which is a diagram illustrating a generalized sensing apparatus for sensing a touch position on a display panel according to an embodiment of the present invention. The sensing apparatus 600 includes a sensing cell 602 and a processing circuit 604. The sensing cell is disposed inside the display panel, and includes a first type sensing device 610 and a second type sensing device 620. The first type sensing device 610 is arranged to generate a first type sensing signal SS_1 when the sensing cell 602 receives an input event I_E. The second type sensing device 620 is adjacent to the first type sensing device 610, and arranged to generate a second type sensing signal SS_2 when the sensing cell 602 receives the input event I_E, wherein a sensing ability of the first type sensing device 610 to detect the input event I_E is different from a sensing ability of the second type sensing device 620 to detect the input event I_E. The processing circuit 604 is coupled to the sensing cell 602, and arranged to output a sensing output signal S_OUT corresponding to the sensing cell 602 according to a difference between the first type sensing signal SS_1 and the second type sensing signal SS_2. Please note that the exemplary implementations of the sensing cells 300-500 shown in FIGs.3-5 may be employed to implement the different sensing abilities to the input event I_E between the first type sensing device 610 and the second type sensing device 620. For example, the first type sensing device 610 may correspond to the first type sensing device 310 shown in FIG. 4, and the second type sensing device 620 may correspond to the second type sensing device 320 shown in FIG. 4. Therefore, in implementations where the sensing cell 602 employs the architectures of the sensing cells 300-500 shown in FIGs.3-5, further description is omitted here for brevity. However, this is for illustrative purposes only, and is not meant to be a limitation of the present invention. In other words, any implementation, which employs sensing devices with different sensing abilities to generate a differential sensing output according to individual sensing signals generated due to the same input event, also obeys the spirit of the present invention and falls within the scope of the present invention.

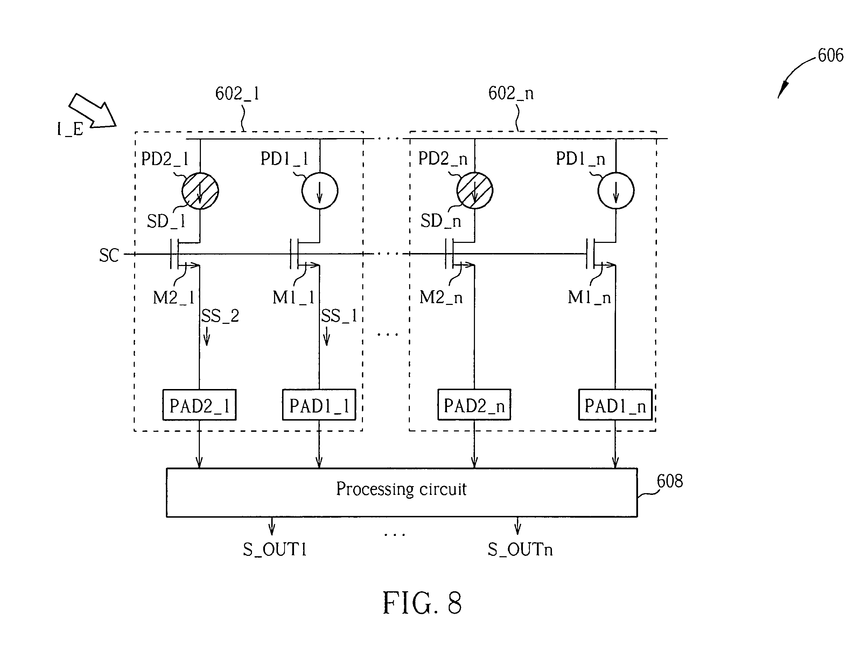

Please refer to FIG. 8, which is a diagram illustrating an exemplary sensing apparatus for sensing a touch position on a display panel according to an embodiment of the present invention. The exemplary sensing apparatus 606 may be used to replace the in-cell photo-sensing system 100 shown in FIG. 1, and includes a plurality of photo-sensing cells 602_1-602_n and a processing circuit 608. The photo-sensing cells 602_1-602_n include a plurality of photo-sensing devices (e.g., in-cell photo sensors) PD1_1 -PD1_n and PD2_1-PD2_n, a plurality of obstruction units SD_1-SD_n, a plurality of transistors M1_1-M1_n and M2_1-M2_n, and a plurality of pads PAD1_1-PAD1_n and PAD2_1-PAD2_n, respectively. Regarding the sensing cell 602_1, a first type sensing device includes the photo-sensing device PD1_1, the transistor M1_1, and the pad PAD1_1, and a second type sensing device includes the photo-sensing device PD2_1, the obstruction unit SD_1, the transistor M2_1, and the pad PAD2_1, wherein the transistor M1_1 and M2_1 are conducted according to a control signal SC. In an alternative design, the second type sensing device may omit the obstruction unit SD_1, and the photo-sensing device PD2_1 may have a design (e.g., the inner material and/or the architecture design) different from that of the photo-sensing device PD1_1, which realizes that the sensing ability of the second type sensing device to detect the input event I_E is different from the sensing ability of the first type sensing device to detect the input event I_E. As a person skilled in the art can readily understand that the sensing apparatus 606 may be employed to improve the touch event detection quality of the in-cell photo-sensing system 100 shown in FIG. 1 after reading above paragraphs directed to FIGs. 3-6A, further description is omitted here for brevity.

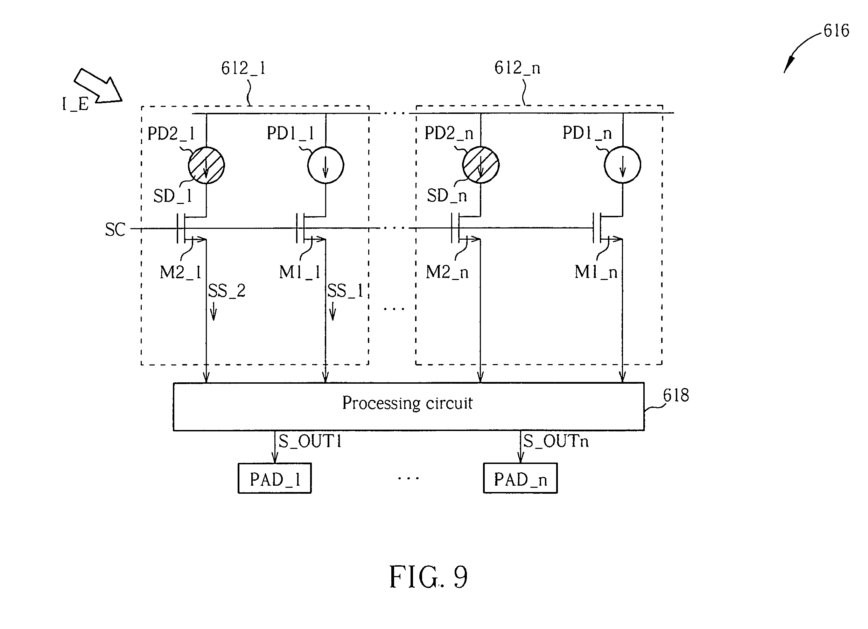

It should be noted that the above is for illustrative purposes only, and is not meant to be a limitation of the present invention. For example, a first type sensing signal and a second type sensing signal of a sensing cell may be transmitted to a processing circuit first, then the processing circuit may generate a sensing output signal according to a difference between the first type sensing signal and the second type sensing signal, and the sensing output signal may be transmitted to a readout circuit of the backend circuit. Please refer to FIG. 9, which is a diagram illustrating another exemplary sensing apparatus for sensing a touch position on a display panel according to another embodiment of the present invention. As shown in FIG. 9, the architecture of the exemplary sensing apparatus 616 is based on the architecture of the exemplary sensing apparatus 606 shown in FIG. 8, and the major difference therebetween is that a first type sensing signal and a second sensing signal corresponding to each of the sensing cells 612_1-612_n (e.g., the first type sensing signal SS_1 and the second sensing signal SS_2 corresponding to the sensing cell 612_1) may be transmitted to the processing circuit 618 directly for generating corresponding sensing output signals S_OUT1-S_OUT_n, respectively. In addition, the processing circuit 618 may transmit the sensing output signals S_OUT1-S_OUT_n to the corresponding pads PAD_1-PAD_n for a readout circuit of the backend circuit (not shown in FIG. 9) to perform further processing. As compared to the sensing apparatus 606, the sensing apparatus 616 may save half the number of pads. As a person skilled in the art can readily understand the operation of the sensing apparatus 616 after reading above paragraphs directed to FIGs. 3-6B, further description is omitted here for brevity.

In brief, the above processing circuit outputs the sensing output signal according to a difference between the received first type sensing signal and the received second type sensing signal of each the sensing cell, which reduces the effects caused by the process variation and the circuit noise interference, and an illumination event (i.e., the input event I_E) may thus be detected more accurately.

Please refer to FIG. 7 again. In addition to employ the exemplary implementations of the sensing cells 300-500 shown in FIGs. 3-5 for realizing that the ability of the first type sensing device to detect the input event I_E is different from the ability of the second type sensing device to detect the input event I_E, the sensing cell 602 may also realize the sufficient difference in sensing abilities between the above two sensing devices by adjusting the material and/or the architecture of one of the first type sensing device 610 and the second type sensing device 620. For example, in a case where the sensing apparatus 600 is applied to the photo-sensing system, the second type sensing device 620 is configured with the material of low transparency, resulting in a sufficient difference in received light intensities between the first type sensing device 610 and the second type sensing device 620. Therefore, there is a sufficient difference between the first type sensing signal SS_1 and the second type sensing signal SS_2 for the processing circuit 604 to detect an illumination event. Briefly, as long as there is a sufficient difference in sensing abilities between the first type sensing device 610 and the second type sensing device 620 for detecting the input event I_E, and accordingly the difference between the first type sensing signal SS_1 and the second type sensing signal SS_2 are transmitted to the processing circuit 604 for detecting the input event I_E, the spirit of the present invention is obeyed.

Take the sensing apparatus 606 shown in FIG. 8 for example. How the effects caused by the process variation and the noise interference are greatly reduced by the proposed sensing apparatus/sensing cell is described as follows.

In a case where the input event I_E shown in FIG. 8 is an illumination event, a first type sensing signal SS_1 of the sensing cell 602_1 may be regarded as including a photocurrent signal S_PC and a noise signal S_N1, wherein the noise signal S_N1 includes a common mode noise signal S_NCM1 (resulting from the local factor of the process variation and the noise coupling) and a differential mode noise S_NDF1 (resulting from the random factor of the process variation and the noise coupling). Thus, the first type sensing signal SS_1 may be represented as:

$$SS\_1 = S\_PC + S\_NCM1 + S\_NDF1.$$

Similarly, a second type sensing signal SS_2 may be represented as:

$$SS\_2 = S\_DC + S\_NCM2 + S\_NDF2.$$

That is, the second type sensing signal SS_2 may also be regarded as including a dark-current signal S_DC and a noise signal S_N2, wherein the noise signal S_N2 includes a common mode noise signal S_NCM2 and a differential mode noise S_NDF2. In an implementation, the processing circuit 608 directly outputs a difference between the first type sensing signal SS_1 and the second type sensing signal SS_2 as the sensing output signal S_OUT1 corresponding to the sensing cell 602_1. To put it another way,

$$
\begin{aligned}
S\_OUT1 &= SS1 - SS2 \\
&= (S\_PC - S\_DC) + (S\_NCM1 - S\_NCM2) + (S\_NDF1 - S\_NDF2) \\
&= S\_OUT11 + S\_OUT12 + S\_OUT13,
\end{aligned}
$$

where the signal S_OUT11 is representative of the photo-signal intensity of the illumination event (i.e., the input event I_E) sensed by the sensing cell 602_1, the signal S_OUT12 is the difference between the common mode noise signal S_NCM1 of the first type sensing signal SS_1 and the common mode noise signal S_NCM2 of the second type sensing signal SS_2, and the signal S_OUT13 is the difference between the differential mode noise S_NDF1 of the first type sensing signal SS_1 and the differential mode noise S_NDF2 of the second type sensing signal SS_2. As the first type sensing device and second type sensing device of the sensing cell 602_1 are adjacent to each other, the first type sensing device and second type sensing device of the sensing cell 602_1 may be regarded as being affected by the same local factor of the process variation and the noise coupling. That is, the signal S_OUT12 may be regarded as zero. In addition, regarding the signal S_OUT11, the signal S_OUT13 is negligible. Since non-ideal signals included in the sensing output signals S_OUTI-S_OUTn outputted from the sensing cells 602_1-602_n are almost eliminated, the sensing apparatus 606 successfully reduces the effects caused by the process variation and the noise coupling on detecting the input event I_E, and the SNR of the sensing apparatus 606 is greatly enhanced.

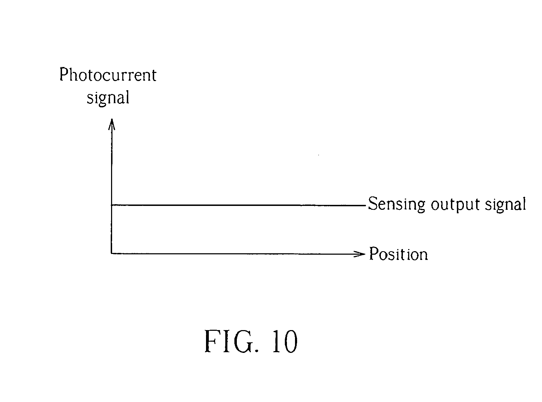

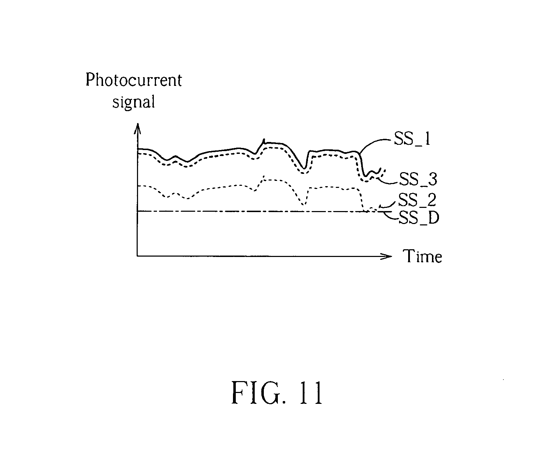

Please refer to FIG. 10 and FIG. 11. FIG. 10 is a diagram illustrating the relation between the photocurrent signal intensity and the position on a display panel of the sensing apparatus 606 shown in FIG. 8, and FIG. 11 is a diagram illustrating the relation between the photocurrent signal intensity and the time in the sensing cell 602_1 shown in FIG. 8. As shown in FIG. 10, by extracting a difference between a first type sensing signal (corresponding to a photocurrent signal) and a second type sensing signal (corresponding to a dark-current signal) of each sensing cell, the local variation factor produced during process between adjacent sensing cells may be greatly reduced. As shown in FIG. 11, a difference SS_D between the first type sensing signal SS_1 and the second type sensing signal SS_2 is of a sufficient amount and a stable signal value, which means that the noise coupling generated between adjacent sensing cells are greatly reduced. Please note that, regarding the in-cell photo-sensing system 100 shown in FIG. 1, as the sensing ability of the photo-sensing device PD_1 to detect the input event I_E is the same as the sensing ability of the photo-sensing device PD_2 to detect the input event I_E, the in-cell photo-sensing system 100 may fail to realize the differential sensing output. In other words, if the in-cell photo-sensing system 100 shown in FIG. 1 outputs a signal according to a difference between the photocurrents PI_1 and PI_2, the wanted signal can not be extracted. For example, the photocurrent PI_2 may correspond to the sensing signal SS_1 shown in FIG. 11, and the photocurrent PI_1 may correspond to the sensing signal SS_3 shown in FIG. 11. As shown in FIG. 11, as a difference between the sensing signal SS_1 and the sensing signal SS_3 is substantially zero, the wanted signal can not be extracted.

Please note that the aforementioned first type sensing device and second type sensing signal may have a plurality of arrangements on the circuit layout. For example, provided that the sensing cells included in the sensing apparatus 606 are arranged in array on a display panel, the photo-sensing devices PD1 and PD_2 (corresponding to the first type sensing device and the second type sensing device, respectively) included in the sensing cell 602_1 may not be arranged in the same column or the same row. In an implementation, circuit layouts of the first type sensing devices and the second type sensing devices may employ the common-centroid layout technique.

To sum up, only by designing and arranging the sensing devices properly, and without adjusting the process, the proposed sensing apparatus may greatly reduce the effects caused by the processing variation and/or the noise coupling when detecting the input event, and the SNR of the sensing apparatus is also enhanced.

All combinations and sub-combinations of the above-described features also belong to the invention.

**Claims**

1. A sensing apparatus (600, 606, 616) for sensing a touch position on a display panel, **characterized by**:

   at least one sensing cell (602, 602_1, 602_n, 612_1, 612_n), disposed inside a display panel, comprising:

   a first type sensing device (610), for generating a first type sensing signal when the sensing cell (602, 602_1, 602_n, 612_1, 612_n) receives an input event; and
   a second type sensing device (620), adjacent to the first type sensing device (610), for generating a second type sensing signal when the sensing cell (602, 602_1, 602_n, 612_1, 612_n) receives the input event, wherein a sensing ability of the first type sensing device (610) to detect the input event is different from a sensing ability of the second type sensing device (620) to detect the input event; and

   a processing circuit (604, 608, 618), coupled to the sensing cell (602, 602_1, 602_n, 612_1, 612_n), for outputting a sensing output signal corresponding to the sensing cell (602, 602_1, 602_n, 612_1, 61 2_n) according to a difference between the first type sensing signal and the second type sensing signal.

2. The sensing apparatus (600, 606, 616) of claim 1, **characterized in that** when the sensing cell (602, 602_1, 602_n, 612_1, 612_n) receives the input event, the first type sensing device (610) generates the first type sensing signal according to the input event, and the second type sensing device (620) generates the second type sensing signal not according to the input event.

3. The sensing apparatus (600, 606, 616) of claim 1 , **characterized in that** when the sensing cell (602, 602_1, 602_n, 612_1, 612_n) receives the input event, the second type sensing device (620) does not receive an input signal of the input event.

4. The sensing apparatus (600, 606, 616) of claim 1, **characterized in that** the first type sensing device (610) and the second type sensing device (620) employ a common-centroid layout technique.

5. The sensing apparatus (61 6) of claim 1, **characterized in that** the first type sensing device comprises:

   a first sensor, for generating the first type sensing signal according to the input event; and
   a first switch, for controlling the first sensor to transmit the first type sensing signal to the processing circuit (61 8); and
   the second type sensing device comprises:

   a second sensor, having a design different from a design of the first sensor, for generating the second type sensing signal; and
   a second switch, for controlling the second sensor to transmit the second type sensing signal to the processing circuit (61 8).

6. The sensing apparatus (606) of claim 1, **characterized in that** the first type sensing device comprises:

   a first pad;
   a first sensor, for generating the first type sensing signal according to the input event; and
   a first switch, for controlling the first sensor to transmit the first type sensing signal to the first pad according to a control signal; and
   the second type sensing device comprises:

   a second pad;
   a second sensor, having a design different from a design of the first sensor, for generating the second type sensing signal; and
   a second switch, for controlling the second sensor to transmit the second type sensing signal to the second pad according to the control signal.

7.  The sensing apparatus (616) of claim 1, **characterized in that** the first type sensing device comprises:

    a first sensor, for generating the first type sensing signal according to the input event; and
    a first switch, for controlling the first sensor to transmit the first type sensing signal to the processing circuit (61 8); and
    the second type sensing device comprises:

        a second sensor, for generating the second type sensing signal;
        an obstruction unit, for obstructing the input signal of the input event from being transmitted to the second sensor; and
        a second switch, for controlling the second sensor to transmit the second type sensing signal to the processing circuit (61 8).

8.  The sensing apparatus (616) of claim 5 or 7, **characterized in that** the processing circuit (618) transmits the sensing output signal to a pad.

9.  The sensing apparatus (606) of claim 1, **characterized in that** the first type sensing device comprises:

    a first pad;
    a first sensor, for generating the first type sensing signal according to the input event; and
    a first switch, for controlling the first sensor to transmit the first type sensing signal to the first pad according to a control signal; and
    the second type sensing device comprises:

        a second pad;
        a second sensor, for generating the second type sensing signal;
        an obstruction unit, for obstructing the input signal of the input event from being transmitted to the second sensor; and
        a second switch, for controlling the second sensor to transmit the second type sensing signal to the second pad according to the control signal.

10. The sensing apparatus (600, 606, 616) of claim 1, **characterized in that** the sensing cell outputs the first type sensing signal and the second type sensing signal simultaneously.

11. The sensing apparatus (600, 606, 616) of claim 1, **characterized in that** the input event represents a brightness variation of the touch position, the first type sensing signal is a photocurrent signal, and the second type sensing signal is a dark-current signal.

12. A sensing method for sensing a touch position on a display panel, **characterized by**:

    when the display panel detects occurrence of an input event, generating a first type sensing signal corresponding to the input event based on a first sensing ability, and generating a second type sensing signal based on a second sensing ability different from the first sensing ability; and
    outputting a sensing output signal corresponding to the input event according to a difference between the first type sensing signal and the second type sensing signal.

13. The sensing method of claim 12, **characterized in that** the step of generating the first type sensing signal corresponding to the input event comprises:

    sensing the input event on the display panel, and accordingly generating the first type sensing signal; and
    the step of generating the second type sensing signal comprises:

        obstructing the input event, and accordingly generating the second type sensing signal.

14. The sensing method of claim 12, **characterized in that** the difference between the first sensing ability and the second sensing ability results from a difference of inner materials of a first type sensing device (610) that generates the first type sensing signal and a second type sensing device (620) that generates the second type sensing signal or a difference between architecture designs of the first type sensing device (610) and the second type sensing device (620).

15. The sensing method of claim 12, **characterized in that** the input event represents a brightness variation of the touch position, the first type sensing signal is a photocurrent signal, and the second type sensing signal is a dark-current signal.

FIG. 1 PRIOR ART

Photocurrent
signal

Position

FIG. 2 PRIOR ART

Photocurrent
signal

Time

FIG. 3 PRIOR ART

EP 2 515 214 A2

EP 2 515 214 A2

300

Sensing cell

I_E

| 320 | 310 |
|---|---|
| Second type sensing device | First type sensing device |

SS_2

SS_1

FIG. 4

EP 2 515 214 A2

I_E

400

420    410

SD    S_2    S_1

SS_2    SS_1

FIG. 5

FIG. 6

FIG. 7

FIG. 8

FIG. 9

EP 2 515 214 A2

Photocurrent
signal

Sensing output signal

Position

FIG. 10

FIG. 11